# EUROPEAN PATENT SPECIFICATION

(11) **EP 1 686 081 B1**
(45) Date of publication and mention of the grant of the patent: **14.05.2008**
(21) Application number: 06075168.2
(22) Date of filing: 25.01.2006
(51) Int. Cl.: B65G 25/06, B62D 21/20, B62D 33/02

(54) **Loading floor**
Lastboden
Plancher de chargement

(30) Priority: 28.01.2005 NL 1028144
(43) Date of publication of application: 02.08.2006
(73) Proprietor: Cargo Floor B.V., 7741 MK Coevorden (NL)
(72) Inventor: De Raad, Frans Arian Heino, 7742 PW Coevorden (NL); Mater, Nicolaas Marc, 7559 KK Hengelo (NL)
(74) Representative: Ferguson, Alexander

(56) References cited:
- EP-A- 1 332 988
- US-A- 4 534 589
- US-A- 5 655 792
- US-A- 5 911 555
- US-A1- 2003 168 318

## Description

The invention relates to a floor of loading, unloading and/or storage spaces, such as truck floors and industrial floors, wherein the floor comprises a series of adjacently placed slats that are reciprocally movable in groups.

It is known to support the slats in such floors on longitudinal tubes extending in slat direction, one for each slat, and supported by cross beams, which in turn are supported on longitudinal girders, which, in one arrangement (centre frame), have been arranged like chassis main girders underneath the cross beams, spaced apart from the longitudinal sides of the loading space and the like. In another arrangement (perimeter frame) the longitudinal girders are situated at the sides of the loading space and the like. In both arrangements the short guides for the slats can be placed on the said longitudinal tubes, at the location of the crossings with the cross beams.

It is known, in particular in case of a centre frame arrangement, to place the cross beams in a lowered position, wherein the upper side of the cross beams is situated below the upper side of the main girders. Such arrangements are also characterised by the indication "passed through girders". In order not to create a discontinuity in the slat floor at the location of the main girders, the cross beams are heightened by welding customised tubes or other profiles thereon. The said longitudinal tubes that support and guide the slats are subsequently attached to said tube. This arrangement requires a lot of material and labour.

It is an object of the invention to provide a floor of the type mentioned in the preamble, in which an arrangement with so-called passed through girders is realised in another way.

It is an object of the invention to provide a floor of the type mentioned in the preamble in which an arrangement with so-called passed through girders is realised in a simpler way.

From one aspect the invention provides a floor of loading, unloading and/or storage spaces, for instance of trucks, comprising a number of slats that are reciprocally movable in loading/unloading direction by means of a drive, a series of cross beams supporting the slats and a number of fixedly positioned main girders extending in the loading/unloading direction and supporting the floor with drive, wherein the cross beams have an upper surface situated below the upper surface of the main girders, wherein series of support/guides for the slats have been attached to the cross beams, wherein the support/guides hold the slats with the lower side of the slats above the upper surface of the main girders. In that way despite the low position of the cross beams, the slats can be supported at the right height, without additional tubes on the cross beams and longitudinal tubes being necessary.

In a preferred embodiment the cross beams have an upper wall, of which the upper surface is situated below the lower surface of an upper wall of the main girder.

In an embodiment as centre frame, the cross beams then extend beyond the main girders in transverse direction of the floor.

In an embodiment the cross beams are less high than the main girders and the cross beams have a lower surface that is situated above the lower surface of the main girders.

In an embodiment the support/guides each comprise a base part placed on the cross beam in question, a support part supporting the slat in question, as well as an intermediate part connecting the base part and the support part with each other. The desired height of the support surface for the slats may particularly be realised by means of the intermediate part. The base part, the intermediate part and the support part may form one unity with each other, preferably are formed as one unity with each other, particularly through injection moulding of synthetic material. When manufacturing the height of the intermediate part can be adjusted to the height dimensions that are usual for passed through girders.

In one embodiment the support part is situated entirely above the upper surface of the main girders.

The height of the base part with intermediate part may be larger than the height of the support part.

The slats may form hollow profiles having an upper wall, side walls extending downward therefrom and lower flanges extending inward from the lower edge of the side walls, wherein the lower flanges extend below the support parts. The support part may in a direction transverse or parallel, respectively, to the slats be widened with respect to the intermediate part.

The attachment of the support/guides is facilitated when the cross beams have an upper wall having a lower surface, wherein the support/guides with integrally formed attachment members engage below the upper wall and against its lower surface.

In a first embodiment thereof the integrally formed attachment members are designed for a snap action, making in a quick placement possible. The attachment members providing snap action may extend through a hole made in the cross beam.

In a second embodiment the attachment members comprise a flange. The flange may form a U-shaped accommodation space in which at least a part of the upper wall of the cross beam has been accommodated. The support/guide may in that case be provided with two pendent confinement strips confining the upper wall of the cross beam between them, wherein the flange is integrally formed at one of the confinement strips. In that way the support/guide can be hooked about the upper wall of the cross beam, in particular with I-profile, Z-profile (having a vertical web) or tilted U-profile.

From a further aspect the invention provides a floor of loading, unloading and/or storage spaces, for instance of trucks, comprising a number of slats that are reciprocally movable in loading/unloading direction by means of a drive, two fixedly positioned main girders extending in the loading/unloading direction and supporting the floor with drive and a series of cross beams supporting the slats, wherein the main girders comprise a vertical wall, such as a web of an I-girder, and the cross beams comprise portions that have been attached to either side of the vertical walls of the main girders, wherein the cross beams have an upper surface situated below the upper surface of the main girders, wherein each cross beam is provided with a separate series of support/guides for the slats, which support/guides have directly been attached to the upper surface of the cross beam in question and with a slat support surface extend above the upper surface of the main girders. Preferably the slats are situated entirely above the upper surface of the main girders.

In one embodiment the support/guides are single, so that they are easy to arrange at the desired location, without having to be made to size in horizontal direction, when placed.

Alternatively the support/guides can be formed like a joined (part) series in the longitudinal direction of the cross beam, as a result of which placement can take place per series and optionally fewer attachment points may suffice.

From a further aspect the invention provides a support/guide for reciprocally movable slats, comprising a support part for a slat and a base part to be placed on a girder or beam of a loading, unloading or storage floor, wherein the base part at its lower side is provided with integrally formed attachment members providing a snap connection in an attachment hole made in the girder or beam.

In one embodiment the attachment members have snap lips and between them a passage for accommodation of a core locking the snap lips, by which means an inadvertent springing back of the snap lips in the snap position is prevented.

From a further aspect the invention provides a support/guide for reciprocally movable slats, comprising a support part for a slat and a base part to be placed on a girder or beam of a loading, unloading or storage floor, wherein the base part at its lower side is provided with at least one lip for engaging about/below an upper flange or upper wall of the beam or girder. The support/guide can simply be placed on the beam or girder, in one embodiment with one lip from a direction transverse to the beam or girder. In another embodiment the support/guide is provided with two oppositely oriented lips, which between them define a passage for the web of the beam or girder. The support/guide can be slid on the beam or girder in the longitudinal direction thereof.

The invention furthermore provides a support/guide for reciprocally movable slats, suitable and intended for a floor according to the invention.

It is noted that from US patent application 2003/0168318 a loading floor with reciprocally movable slats is known, wherein the slats are supported on cross beams of a loading floor by means of guides, which cross beams themselves are supported on top of a chassis girder.

US patent specification 4.534.589 regards a rigid, immobile floor plate forming one unity of a loading floor that is supported on cross beams that haven been sunk in the main girders of the chassis.

The aspects and measures described in this description and claims of the application and/or shown in the drawings of this application may where possible also be used individually. Said individual aspects, such as the snap attachment of a support/guide in a hole in a girder or beam and the support/guide provided with a lip at the lower side, and other aspects may be the subject of divisional patent applications related thereto. This particularly applies to the measures and aspects that have been described in the sub claims. The invention will be elucidated on the basis of a number of exemplary embodiments shown in the attached drawings, in which:
Figure 1 shows a first exemplary embodiment of a slat support/guide according to the invention;
Figures 2A-D show a front view, a top view, a side view and a bottom view, respectively, of the guide of figure 1, the figures 2B and 2C including a slat in the drawing;
Figure 2E shows the guide of figure 1, seen diagonally from below;
Figure 2F shows a detail at the lower side of the guide of figure 1;
Figure 3 shows a second exemplary embodiment of a slat support/guide according to the invention;
Figures 4A, 4B and 4C show a front view, a side view and a bottom view, respectively, of the guide of figure 3;
Figures 5 and 6 show a longitudinal view and a transverse view, respectively, of a floor according to the invention; and
Figures 7 and 8 show diagonal bottom views of the placement of guides according to the figures 1 and 3, respectively, on a cross beam in a floor according to the invention.

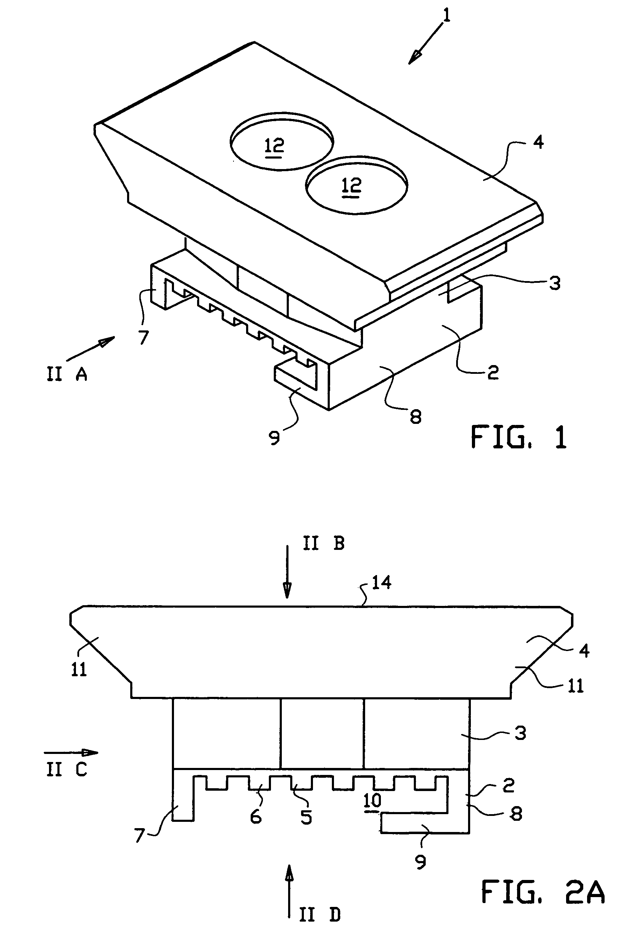

The support/guide 1 in figure 1 is formed as one unity by injection moulding of a suitable synthetic material, such as HDPE.

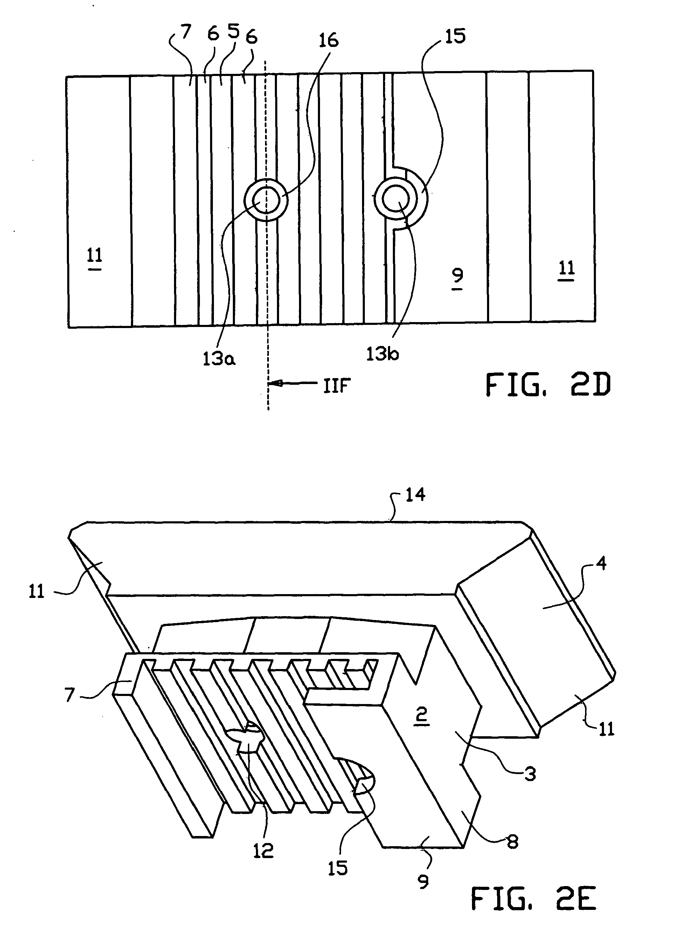

The support/guide 1, also shown in the figures 2A-E, comprises a base part 2 and a support part 4, which are connected to each other by an intermediate part 3. The intermediate part 3 is narrowed down with respect to the base part 2 and the support part 4.

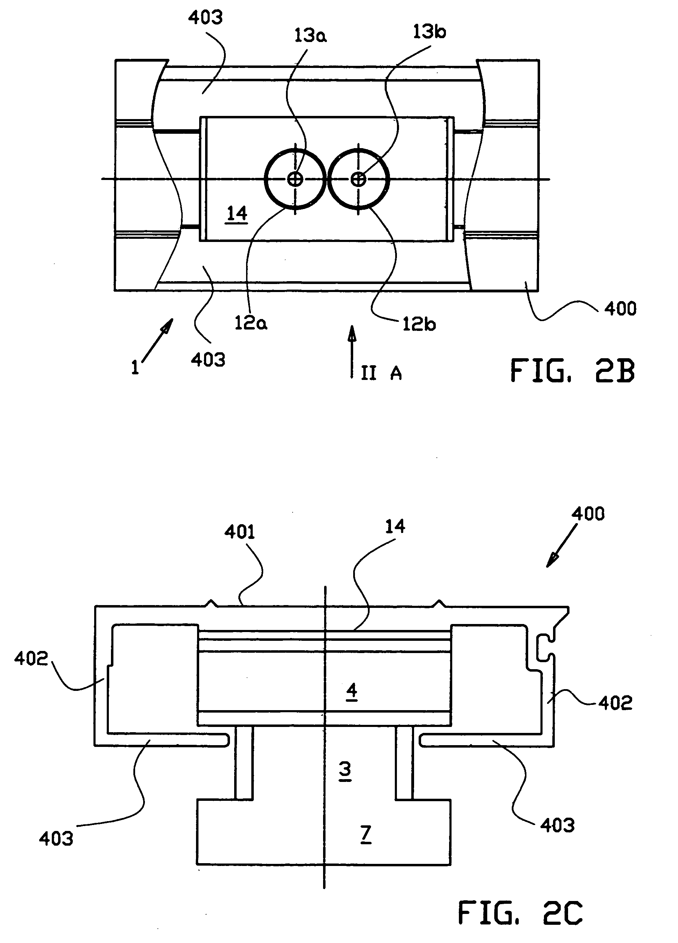

The support part 4 has a support surface 14 for immediate support of the upper wall of a slat 400 (see figures 2B and 2C). The slat 400, is in a manner known per se, U-shaped with upper wall 401, side walls 402 and turned lower flanges 403. The lower flanges 403 engage about and under the support part 4, as shown in figure 2C. The lower surface of the upper wall 401 supports slidingly on the upper surface 14 of the guide 1. In longitudinal view, see figure 2A, the support part 4 is extended by triangular end parts 11, in order to increase the dimension in longitudinal direction of the support surface 14.

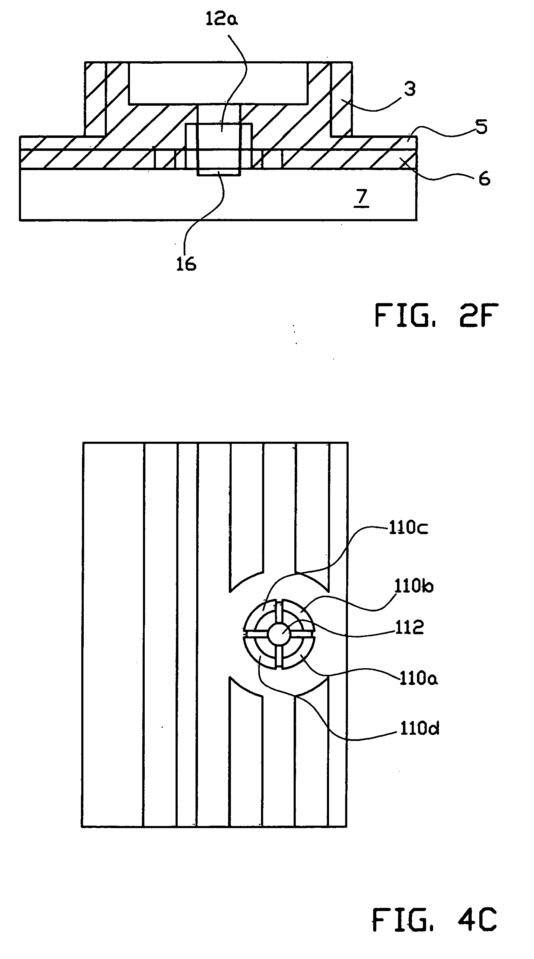

Through the support part 4 -in this example two- holes 12 have been arranged (optionally one hole is also possible), which extend through intermediate part 3 and base part 2 in order to open in openings 13a, 13b in the lower surface of the guide 1. The holes 12 are situated on either side of a centre (see figure 2B) of the guide 1. The holes 12 are suitable for passage of attachment means, such as bolts, which in that case extend through the bottom openings 13a, 13b (also see figure 2D). The edge of the openings 13a, 13b may be provided with a protruding centring cam 16, see figures 2D and 2F.

The base part 2 has a support wall 5 which is intended to support on the upper surface of a cross beam, and which is provided with ribs 6. The ribs 6 are transverse to the longitudinal direction of support part 4.

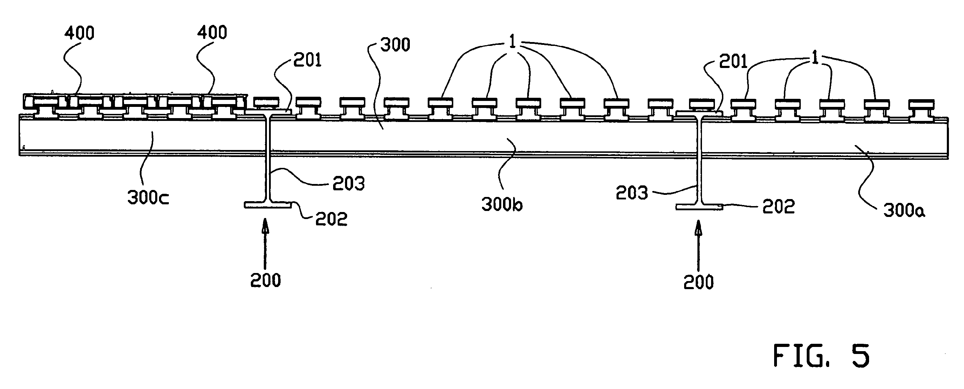

At opposite edges the wall 5 changes into pendent placement or confinement strips 7, 8 wherein the placement strip 8 at the bottom is turned into a flange 9. The placement strips 7, 8 and flange 9 with the upper wall 5 define an inner space 10 for accommodation of the upper wall of a cross beam, as shown in the figures 5 and further. The flange 9 is provided with a recess 15 for making pop rivets possible for the attachment of the guide on the cross beam. It is noted that also the placement strip 7 can be provided with such a flange 9, which in that case with the other flange defines a passage for preferably fitting accommodation of the web of a cross beam.

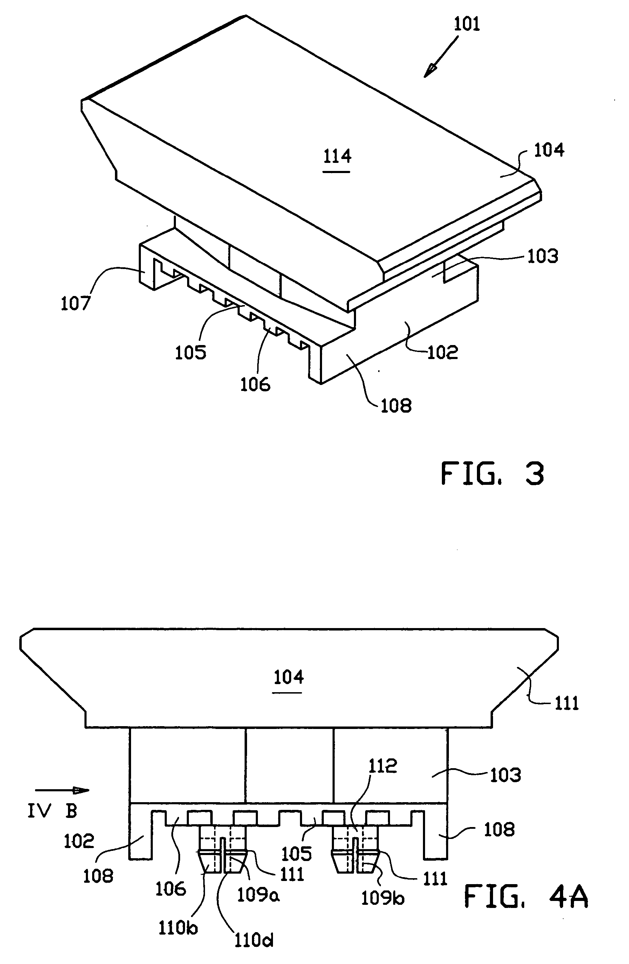

The other exemplary embodiment of a slat support/guide according to the invention shown in figure 3, has reference number 101, and is substantially formed and manufactured similarly, yet is distinct in that now instead of continuous attachment holes 12 -in this example- two snap cams 109a, 109b have been integrally formed on the wall 105 of the base part 102. The snap cams 109a, 109b each comprise four (in this example) resilient snap lips 110a-d that are separated from each other by slits. The snap lips 110a-d have been provided with a shoulder 111. The snap lips 110a-d are surrounded by a passage 112 in the bottom wall 105 in which, after placement of the guide on a cross beam, if so desired a locking pin can be inserted to prevent the snap lips from moving towards each other.

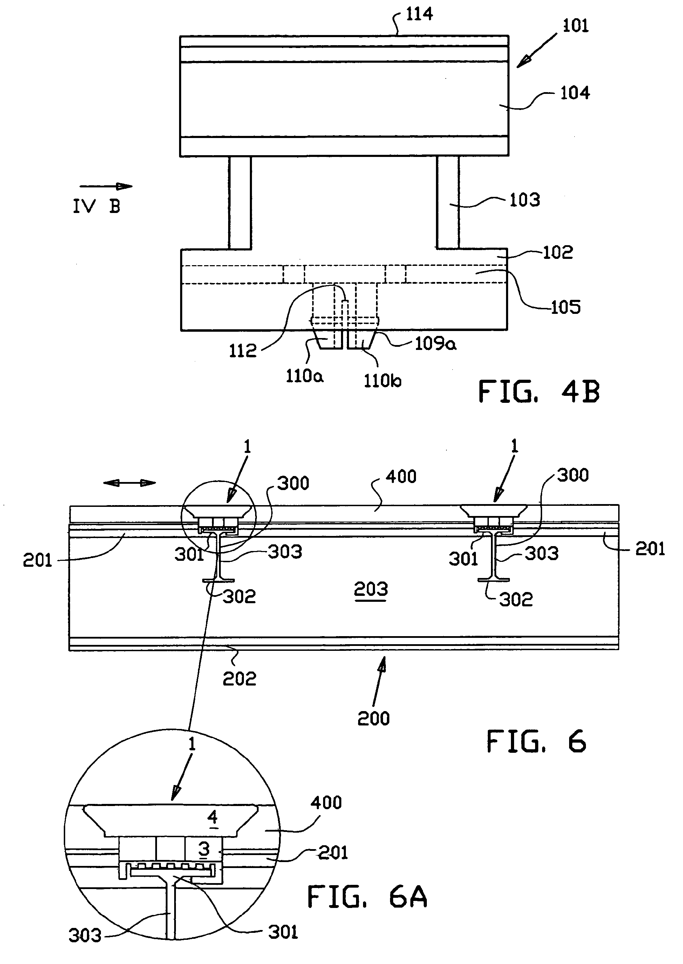

In the figures 5 and 6 the main set-up of a floor according to the invention is shown. Shown are usually steel longitudinal girders 200, for instance of a centre frame loading floor, for instance of a truck. The main girders 200 form the main part of the chassis. At regular intervals in longitudinal direction, continuous, usually steel, cross beams 300 have been placed, in which sections 300a, 300b and 300c can be distinguished. Beforehand the main girders 200 have been fittingly cut out so as to let the cross beams 300 extend through the main girder 200. At the location of the transitions of the sections 300a/b and 300b/c the cross beam 300 is welded to the webs 203 of the main girders 200. With their lower flange 302 the cross beams 300 are situated above the lower flange 202 of the main girders 200, and with the upper surface of their upper flange 301 just below the lower surface of the upper flange 201 of the main girder 200.

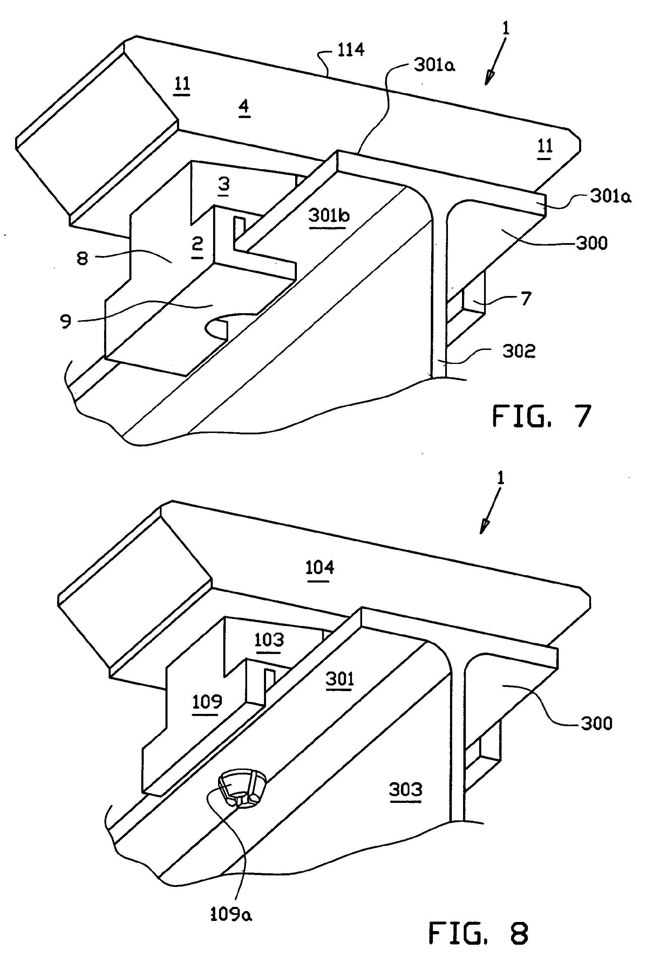

At regular intervals, see figure 5, guides 1 have been placed on the upper flange 301 of the cross beams 300. In that case the guide is manipulated such that together with flange 9 it is hooked below the upper flange 301, and subsequently the guide 1 is slid over the cross beam, wherein the upper flange enters the inner space 10. Finally the guide 1 with confinement strip 7 is pressed over the opposite edge of the upper flange 301. The upper flange 301 is then confined in a fitting manner between the confinement strips 7 and 8, as shown in figure 7. Beforehand a hole has been drilled in the one half of the flange 301 and/or in the other half thereof, which hole will have to be in line with the holes 12a,b in the guide 1, so that attachment means, such as bolts or rivets, can be passed through for securing the position of guide 1 on the cross beam 300, in longitudinal direction thereof. For facilitating the placement of the guide 1 the openings 13a, b may have been provided with said protruding centring cam 16 that fits exactly in the hole made.

Alternatively it is possible to place the guide 1 first on the upper flange of the cross beam and then to drill a hole using a drill passing through the holes 12, and subsequently to arrange the rivet and the like.

After attachment of the guide, the upper flange 300 abuts the lower side of the ribs 6 with the upper surface 301 a, and the lower surface 301 b abuts the upper side of the flange 9.

At the location of the main girders 200 adapted guides 1' are attached to the upper flange 201, wherein the height of the upper surfaces of the guides 1 and 1' is equal, and the same applies to the intervals between the guides 1 and 1'.

In the mounted condition of the guides 1, as can be seen in figure 6, the support parts 4 of the guides 1 extend entirely above the level of the upper surface 201a of the upper flange 201 of the main girders 200. The slats 400 can be shifted on the guides 1 forming a series of support points in the longitudinal direction of the main girders 200. This can be effected for adjacently situated slats, in the direction perpendicular to the plane of the drawing of figure 5. All cross beams, at least nearly all cross beams of a floor can be provided with guides in this way.

In the alternative embodiment shown in figure 8 no lip is hooked, yet the guide 101 is placed from above on the upper flange 301 of the cross beam 300. In that case (in this example) two holes have been arranged beforehand in the upper flange 301. With the lower end of the snap cams 109a, 109b the guide 101 is pressed on the edges of said holes. Subsequently a downward force is exerted onto the guide 101, as a result of which, due to the inclined walls of the lower ends of the snap cams 109a,b, the snap members 110a-d spring towards each other, made possible by the slits. Finally the shoulders 111 come from under the holes in the upper flange 301, and the snap lips 110a-d may spring away from each other again. The upper flange 301 is then confined between the lower side of the ribs 106 and the shoulders 111 of the snap cams 109a,b. In this way the guide 101 is clamp-fixedly attached to the cross beam 300. Additional connection means are not necessary then in most cases, although it is possible to place a locking pin in the passage 112, as discussed.

## Claims

1. Floor of loading, unloading and/or storage spaces, for instance of trucks, comprising a number of slats (400) that are reciprocally movable in loading/unloading direction by means of a drive, a series of cross beams (300) supporting the slats and a number of fixedly positioned main girders (200) extending in the loading/unloading direction and supporting the floor with drive, wherein the cross beams have an upper surface (301a) situated below the upper surface (201a) of the main girders, wherein series of support/guides (1) for the slats have been attached to the cross beams, wherein the support/guides hold the slats with the lower side of the slats above the upper surface of the main girders.

2. Floor according to claim 1, wherein the cross beams have an upper wall, of which the upper surface is situated below the lower surface of an upper wall of the main girder.

3. Floor according to claim 1 or 2, wherein the cross beams extend beyond the main girders in transverse direction of the floor.

4. Floor according to claim 1, 2 or 3, wherein the cross beams have a lower surface that is situated above the lower surface of the main girders.

5. Floor according to any one of the claims 1-4, wherein the support/guides each comprise a base part placed on the cross beam in question, a support part supporting the slat in question, as well as an intermediate part connecting the base part and the support part with each other, wherein preferably the base part, the intermediate part and the support part form one unity with each other, preferably are formed as one unity with each other.

6. Floor according to claim 4 or 5, wherein the support part is situated entirely above the upper surface of the main girders.

7. Floor according to claim 4, 5 or 6, wherein the height of the base part with intermediate part is larger than the height of the support part.

8. Floor according to any one of the claim 4-7, wherein the slats form hollow profiles having an upper wall, side walls extending downward therefrom and lower flanges extending inward from the lower edge of the side walls, wherein the lower flanges extend below the support parts.

9. Floor according to any one of the claims 4-8, wherein the support part is widened with respect to the intermediate part in a direction transverse to the slats.

10. Floor according to any one of the claims 4-9, wherein the support part is widened with respect to the intermediate part in a direction parallel to the slats.

11. Floor according to any one of the preceding claims, wherein the cross beams have an upper wall having a lower surface, wherein the support/guides with integrally formed attachment members engage below the upper wall and against its lower surface.

12. Floor according to claim 11, wherein the integrally formed attachment members are designed for providing a snap action.

13. Floor according to claim 11, wherein the attachment members comprise a flange, wherein preferably the flange forms an U-shaped accommodation space in which at least a part of the upper wall of the cross beam has been accommodated, and/or wherein the support/guide is provided with two pendent confinement strips confining the upper wall of the cross beam between them, wherein the flange is integrally formed at one of the confinement strips.

14. Floor of loading, unloading and/or storage spaces for instance of trucks, comprising a number of stats (400) that are reciprocally movable in loading/unloading direction by means of a drive, two fixedly positioned main girders (200) extending in the loading/unloading direction and supporting the floor with drive and a series of cross beams (300) supporting the slats, wherein the main girders comprise a vertical wall, such as a web of an I-girder, and the cross beams comprise portions that have been attached to either side of the vertical walls of the main girders, wherein the cross beams have an upper surface (301a) situated below the upper surface (201a) of the main girders, wherein each cross beam is provided with a separate series of support/guides (1) or the slats, which support/guides have directly been attached to the upper surface of the cross beam in question and with a slat support surface extend above the upper surface of the main girders, wherein preferably the slats are situated entirely above the upper surface of the main girders.

15. Floor according to any one of the preceding claims, wherein the support/guides are made from synthetic material, preferably by means of injection moulding.

16. Floor according to any one of the preceding claims, wherein the support/guides are single.

17. Floor according to any one of the claims 1-16, wherein the support/guides are formed like a joined (part) series in the longitudinal direction of the cross beam.

18. Floor according to any one of the preceding claims, wherein the Support/guide for reciprocally movable slats, comprises a support part for a slat and a base part to be placed on a girder or beam of a loading, unloading or storage floor, wherein the base part at its lower side is provided with integrally formed attachment members for a snap connection in an attachment hole made in the girder or beam, wherein preferably the attachment members comprise a number of resilient snap lips and/or wherein the attachment members have a passage for accommodation of a core locking the snap lips.

19. Floor according to anyone of the claims 1-17, wherein the Support/guide for reciprocally movable slats, comprises a support part for a slat and a base part to be placed on a girder or beam of a loading, unloading or storage floor, wherein the base part at its lower side is provided with at least one lip for engaging about/below an upper flange or upper wall of the beam or girder, wherein the support/guide is preferably provided with two oppositely oriented lips, which between them define a passage for the web of the beam or girder.

20. Support/guide for reciprocally movable slats, suitable and intended for a floor according to any one of the preceding claims.

21. Loading, unloading or storage space provided with a floor according to any one of the claims 1-17.

22. Truck provided with a loading, unloading or storage space according to claim 21.

## Patentansprüche

1. Boden für Lade-, Entlade- und/oder Speicherräume, beispielsweise Lastwagen, umfassend eine Anzahl von Latten (400), welche in Lade-/Entladerichtung mittels eines Antriebs hin und her bewegbar sind, eine Reihe von Querbalken (300), welche die Latten tragen und eine Anzahl von fest positionierten Hauptträgern (200), welche sich in Lade-/Entladerichtung erstrecken und den Boden mit den Antrieb tragen, wobei die Querbalken eine obere Oberfläche (301a) aufweisen, welche unter der oberen Oberfläche (201a) des Hauptträgers liegen, wobei Reihen von Trägern/Führungen (1) für die Latten an den Querbalken befestigt worden sind, wobei die Träger/Führungen die Latten mit der Unterseite der Latten über der oberen Oberseite der Hauptträger halten.

2. Boden gemäß Anspruch 1, worin die Querbalken eine obere Wand aufweisen, wovon die obere Oberfläche unter der unteren Oberfläche einer oberen Wand des Hauptträgers liegt.

3. Boden gemäß Anspruch 1 oder 2, worin die Querbalken sich über die Hauptträger in Querrichtung des Bodens erstrecken.

4. Boden gemäß Anspruch 1, 2 oder 3, worin die Querträger eine untere Oberfläche aufweisen, welche über der unteren Oberfläche der Hauptträger liegt.

5. Boden gemäß einem jeden der Ansprüche 1 bis 4, worin die Träger/Führungen jeweils ein Fußteil, das auf dem fraglichen Querbalken angeordnet ist, ein Stützteil, welches die fraglichen Latten stützt, sowie ein Zwischenteil umfassen, welches das Fußteil und das Trägerteil miteinander verbindet, wobei vorzugsweise das Fußteil, das Zwischenteil und das Trägerteil eine Einheit miteinander bilden, vorzugsweise als Einheit miteinander ausgebildet sind.

6. Boden gemäß Anspruch 4 oder 5, worin das Trägerteil vollständig über der oberen Oberfläche der Hauptträger liegt.

7. Boden gemäß Anspruch 4, 5 oder 6, worin die Höhe des Fußteiles zusammen mit dem Zwischenteil größer als die Höhe des Trägerteiles ist.

8. Boden gemäß einem jeden der Ansprüche 4 bis 7, worin die Latten Hohlprofile bilden, welche eine obere Wand, Seitenwände, die sich davon nach unten erstrecken und untere Flansche, welche sich nach innen von der unteren Kante der Seitenwände erstrecken, aufweisen, wobei sich die unteren Flansche unter die Trägerteile erstrecken.

9. Boden gemäß einem jeden der Ansprüche 4 bis 8, worin das Trägerteil bezüglich des Zwischenteiles in einer Richtung quer zu den Latten erweitert ist.

10. Boden gemäß einem jeden der Ansprüche 4 bis 9, worin das Trägerteil bezüglich des Zwischenteiles in einer Richtung parallel zu den Latten erweitert ist.

11. Boden gemäß einem jeden der vorhergehenden Ansprüche, worin die Querbalken eine obere Wand mit einer unteren Oberfläche aufweisen, wobei die Träger/Führungen mit integral ausgebildeten Befestigungselementen unter die obere Wand und gegen ihre untere Oberfläche eingreifen.

12. Boden gemäß Anspruch 11, wobei die integral ausgebildeten Befestigungselemente mit Schnappwirkung ausgebildet sind.

13. Boden gemäß Anspruch 11, wobei die Befestigungselemente einen Flansch umfassen, wobei vorzugsweise der Flansch einen U-förmigen Aufnahmeraum bildet, in welchem wenigstens ein Teil der oberen Wand des Querbalkens aufgenommen ist und/oder wobei der Träger/die Führung mit zwei hängenden Beschränkungsstreifen versehen ist, welche die obere Wand des Querbalkens zwischen sich beschränken, wobei der Flansch integral an einem der Beschränkungsstreifen ausgebildet ist.

14. Boden von Lade-, Entlade- und/oder Speicherräumen, beispielsweise Lastwagen, umfassend eine Anzahl von Latten (400), welche in Lade-/Entladerichtung mittels eines Antriebs hin und her beweglich sind, zwei fest positionierte Hauptträger (200), welche sich in der Lade-/Entladerichtung erstrecken und den Boden mit Antrieb tragen und eine Reihe von Querbalken (300), welche die Latten tragen, wobei die Hauptträger eine senkrechte Wand, wie eine Wange eines I-Trägers, umfassen und die Querbalken Bereiche umfassen, welche an jeder Seite der senkrechten Wand der Hauptträger angebracht sind, wobei die Querbalken eine obere Oberfläche (301a) aufweisen, welche unter der oberen Oberfläche (201a) der Hauptträger liegt, wobei jeder Querbalken mit einer separaten Reihe von Trägern/Führungen (1) für die Latten versehen ist, wobei die Träger/Führungen direkt an der oberen Oberfläche des fraglichen Querbalkens angebracht worden sind und sich mit einer Lattenträgeroberfläche über die obere Oberfläche der Hauptträger erstrecken, wobei vorzugsweise die Latten vollständig über der oberen Oberfläche der Hauptträger liegen.

15. Boden nach einem jeden der vorhergehenden Ansprüche, worin die Träger/Führungen aus synthetischem Material hergestellt sind, vorzugsweise durch Spritzgießen.

16. Boden nach einem jeden der vorhergehenden Ansprüche, worin die Träger/Führungen einzeln sind.

17. Boden nach einem jeden der Ansprüche 1 bis 16, worin die Träger/Führungen wie eine verbundene (Teil-)Reihe in Längsrichtung des Querbalkens ausgebildet sind.

18. Boden gemäß einem jeden der vorhergehenden Ansprüche, worin der Träger/die Führung für hin und her bewegliche Latten ein Trägerteil für eine Latte und ein Fußteil, welches auf einem Träger oder Balken eines Lade-/Entlade- oder Speicherbodens angeordnet werden soll, umfasst, wobei das Fußteil an seiner Unterseite mit integral angeformten Befestigungselementen für eine Schnappverbindung in ein Befestigungsloch, das in dem Träger oder Balken ausgebildet ist, versehen ist, wobei vorzugsweise die Befestigungselemente eine Anzahl von elastischen Schnapplippen umfassen und/oder wobei die Befestigungselemente einen Durchgang zur Aufnahme eines Kernes besitzen, welcher die Schnapplippen feststellt.

19. Boden gemäß einem jeden der Ansprüche 1 bis 17, worin der Träger/die Führung für hin und her bewegliche Latten ein Trägerteil für eine Latte und ein Fußteil umfasst, welches auf einem Träger oder Balken des Lade-, Entlade- oder Speicherbodens angeordnet werden soll, wobei das Fußteil an seiner Unterseite mit wenigstens einer Lippe zur Ineingriffnahme über/unter einen oberen Flansch oder eine obere Wand des Balkens oder Trägers versehen ist, wobei der Träger/die Führung vorzugsweise mit zwei gegeneinander gerichteten Lippen versehen ist, welche zwischen sich einen Durchgang für die Wange des Balkens oder Trägers definieren.

20. Träger/Führung für hin und her bewegliche Latten, geeignet und beabsichtigt für einen Boden gemäß einem jeden der vorhergehenden Ansprüche.

21. Lade, Entlade- oder Speicherraum, versehen mit einem Boden gemäß einem jeden der Ansprüche 1 bis 17.

22. Lastwagen, versehen mit einem Lade-, Entlade- oder Speicherraum gemäß Anspruch 21.

## Revendications

1. Plancher d'espaces de chargement, déchargement et/ou stockage, par exemple de camions, comprenant un certain nombre de lattes (400) qui peuvent être déplacées selon un mouvement alternatif dans une direction de chargement/déchargement au moyen d'un dispositif d'entraînement, une série de traverses (300) supportant les lattes et un certain nombre de poutres principales (200) positionnées fixement s'étendant dans la direction de chargement/déchargement et supportant le plancher avec le dispositif d'entraînement, dans lequel les traverses ont une surface supérieure (301a) située au-dessous de la surface supérieure (201a) des poutres principales, dans lequel des séries de supports/guides (1) pour les lattes ont été fixées aux traverses, dans lequel les supports/guides maintiennent les lattes avec le côté inférieur des lattes au-dessus de la surface supérieure des poutres principales.

2. Plancher selon la revendication 1, dans lequel les traverses ont une paroi supérieure, dont la surface supérieure est située au-dessous de la surface inférieure d'une paroi supérieure de la poutre principale.

3. Plancher selon la revendication 1 ou 2, dans lequel les traverses s'étendent au-delà des poutres principales dans la direction transversale du plancher.

4. Plancher selon la revendication 1, 2 ou 3, dans lequel les traverses ont une surface inférieure qui est située au-dessus de la surface inférieure des poutres principales.

5. Plancher selon l'une quelconque des revendications 1 à 4, dans lequel les supports/guides comprennent chacun une partie de base placée sur la traverse en question, une partie de support supportant la latte en question, ainsi qu'une partie intermédiaire reliant la partie de base et la partie de support l'une à l'autre, dans lequel, de préférence, la partie de base, la partie intermédiaire et la partie de support forment une unité les unes avec les autres, de préférence sont formées en tant qu'une unité les unes avec les autres.

6. Plancher selon la revendication 4 ou 5, dans lequel la partie de support est située entièrement au-dessus de la surface supérieure des poutres principales.

7. Plancher selon la revendication 4, 5 ou 6, dans lequel la hauteur de la partie de base avec la partie intermédiaire est supérieure à la hauteur de la partie de support.

8. Plancher selon l'une quelconque des revendications 4 à 7, dans lequel les lattes forment des profils creux ayant une paroi supérieure, des parois latérales s'étendant vers le bas de celle-ci et des rebords inférieurs s'étendant vers l'intérieur à partir du bord inférieur des parois latérales, dans lequel les rebords inférieurs s'étendent au-dessous des parties de support.

9. Plancher selon l'une quelconque des revendications 4 à 8, dans lequel la partie de support est élargie par rapport à la partie intermédiaire dans une direction transversale aux lattes.

10. Plancher selon l'une quelconque des revendications 4 à 9, dans lequel la partie de support est élargie par rapport à la partie intermédiaire dans une direction parallèle aux lattes.

11. Plancher selon l'une quelconque des revendications précédentes, dans lequel les traverses ont une paroi supérieure ayant une surface inférieure, dans lequel les supports/guides avec des éléments de fixation formés d'un seul tenant s'engagent au-dessous de la paroi supérieure et contre sa surface inférieure.

12. Plancher selon la revendication 11, dans lequel les éléments de fixation formés d'un seul tenant sont conçus pour réaliser une action d'encliquetage.

13. Plancher selon la revendication 11, dans lequel les éléments de fixation comprennent un rebord, dans lequel, de préférence, le rebord forme un espace de réception en forme de U dans lequel au moins une partie de la paroi supérieure de la traverse a été reçue, et/ou dans lequel le support/guide est pourvu de deux bandes de confinement pendantes confinant la paroi supérieure de la traverse entre elles, dans lequel le rebord est formé d'un seul tenant au niveau de l'une des bandes de confinement.

14. Plancher d'espaces de chargement, déchargement et/ou stockage, par exemple de camions, comprenant un certain nombre de lattes (400) qui peuvent être déplacées selon un mouvement alternatif dans une direction de chargement/déchargement au moyen d'un dispositif d'entraînement, deux poutres principales (200) positionnées fixement s'étendant dans la direction de chargement/déchargement et supportant le plancher avec le dispositif d'entraînement et une série de traverses (300) supportant les lattes, dans lequel les poutres principales comprennent une paroi verticale, telle qu'une âme d'une poutre en I, et les traverses comprennent des parties qui ont été fixées à chaque côté des parois verticales des poutres principales, dans lequel les traverses ont une surface supérieure (301a) située au-dessous de la surface supérieure (201a) des poutres principales, dans lequel chaque traverse est pourvue d'une série séparée de supports/guides (1) pour les lattes, lesquels supports/guides ont été fixés directement à la surface supérieure de la traverse en question et avec une surface de support de latte s'étendent au-dessus de la surface supérieure des poutres principales, dans lequel, de préférence, les lattes sont situées entièrement au-dessus de la surface supérieure des poutres principales.

15. Plancher selon l'une quelconque des revendications précédentes, dans lequel les supports/guides sont réalisés en un matériau synthétique, de préférence par moulage par injection.

16. Plancher selon l'une quelconque des revendications précédentes, dans lequel les supports/guides sont uniques.

17. Plancher selon l'une quelconque des revendications 1 à 16, dans lequel les supports/guides sont formés en une série (partie) jointe dans la direction longitudinale de la traverse.

18. Plancher selon l'une quelconque des revendications précédentes, dans lequel le support/guide pour des lattes pouvant être déplacées selon un mouvement alternatif comprend une partie de support pour une latte et une partie de base devant être placée sur une poutre ou traverse d'un plancher de chargement, déchargement ou stockage, dans lequel la partie de base, au niveau de son côté inférieur, est pourvue d'éléments de fixation formés d'un seul tenant pour une fixation par encliquetage dans un trou de fixation réalisé dans la poutre ou traverse, dans lequel, de préférence, les éléments de fixation comprennent un certain nombre de lèvres élastiques d'encliquetage et/ou dans lequel les éléments de fixation comportent un passage pour la réception d'un noyau verrouillant les lèvres d'encliquetage.

19. Plancher selon l'une quelconque des revendications 1 à 17, dans lequel le support/guide pour des lattes pouvant être déplacées selon un mouvement alternatif comprend une partie de support pour une latte et une partie de base devant être placée sur une poutre ou traverse d'un plancher de chargement, déchargement ou stockage, dans lequel la partie de base, au niveau de son côté inférieur, est pourvue d'au moins une lèvre destinée à être engagée autour/au-dessous d'un rebord supérieur ou d'une paroi supérieure de la traverse ou poutre, dans lequel le support/guide est de préférence pourvu de deux lèvres orientées de manière opposée, qui définissent entre elles un passage pour l'âme de la traverse ou poutre.

20. Support/guide pour des lattes pouvant être déplacées selon un mouvement alternatif, approprié et destiné à un plancher selon l'une quelconque des revendications précédentes.

21. Espace de chargement, déchargement ou stockage pourvu d'un plancher selon l'une quelconque des revendications 1 à 17.

22. Camion pourvu d'un espace de chargement, déchargement ou stockage selon la revendication 21.
